(19) Europäisches Patentamt / European Patent Office / Office européen des brevets

(11) **EP 4 439 028 A1**

(12) **EUROPEAN PATENT APPLICATION**

(43) Date of publication:
**02.10.2024  Bulletin 2024/40**

(21) Application number: **23164762.9**

(22) Date of filing: **28.03.2023**

(51) International Patent Classification (IPC):
*G01L 5/162* (2020.01)  *G01L 1/18* (2006.01)
*G01L 1/22* (2006.01)

(52) Cooperative Patent Classification (CPC):
**G01L 5/162; G01L 1/18; G01L 1/2206**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Murata Manufacturing Co., Ltd.
Nagaokakyo-shi, Kyoto 617-8555 (JP)**

(72) Inventor: **KAAJAKARI, Ville
00350 Helsinki (FI)**

(74) Representative: **Boco IP Oy Ab
Kansakoulukatu 3
00100 Helsinki (FI)**

(54)  **A MULTI-AXIS FORCE SENSOR**

(57)  The disclosure describes a three-axis piezoresistive force sensor with a mass element located on a plane flexible element and with pairs of piezoresistors connected in series. The disclosed sensor architectures and biasing configurations allow improvements in device reliability and offer possibility for size reduction.

**EP 4 439 028 A1**

## Description

FIELD OF THE DISCLOSURE

This disclosure relates to electronic devices and more particularly to MEMS multi-axis force sensors. The present disclosure further concerns electrical contacting in MEMS three-axis force sensors with a plurality of piezoresistors.

BACKGROUND OF THE DISCLOSURE

A piezo-resistive force sensor is a type of sensor that converts an input mechanical force into an electrical output signal that can be measured. It comprises piezoresistors attached to an elastic diaphragm that bends with applied mechanical force. When mechanical pressure is applied to the sensor, the diaphragm flexes inducing stress in the piezoresistors. Consequently, their electrical resistance values change. Normally, any change in resistance is converted into an output voltage.
Microelectromechanical (MEMS) devices are electronic components which combine mechanical and electrical parts. They can have either simple or complex structures with various moving elements. MEMS devices include different type of sensors such as temperature sensors, pressure sensors and vibration sensors.
MEMS piezoresistive force sensors also use the piezoresistive effect. They can be fabricated using semiconductor technology. MEMS piezoresistive force sensors can either be single-axis force sensors or multi-axis force sensors. Multi-axis force sensors are designed to measure the force in two or more spatial directions simultaneously. They are used in applications that require measurements of multi-directional forces such as robot hands which need to be equipped with sensors capable of measuring forces in the x, y, and z directions simultaneously.
MEMS force sensor structures are compact in size and easy to manufacture. Current MEMS three-axis force sensors use beam-based elastic structure designs. However, such structures can easily break. Furthermore, such designs require many electrical contacts which makes miniaturization a challenge. Therefore, making a robust MEMS three-axis force sensor that is small in size requires modifying the device design and minimizing the number of contact points.

BRIEF DESCRIPTION OF THE DISCLOSURE

The object of the disclosure is achieved by an arrangement which is characterized by what is stated in the independent claims. The preferred embodiments of the disclosure are disclosed in the dependent claims.
The disclosure is based on the idea of building a three-axis piezoresistive force sensor where a mass element is located on a plane flexible element and where piezoresistors arrangements and various electrical biasing configurations allow to reduce the number of electrical contacts. This provides improvements in device reliability and offers possibility for size reduction.

BRIEF DESCRIPTION OF THE DRAWINGS

In the following, the disclosure will be described in greater detail by means of preferred embodiments with reference to the accompanying drawings, in which

Figure 1 illustrates an example of a sectional view of a multi-axis force sensor.

Figure 2a illustrates a possible architecture of a multi-axis force sensor comprising a mass element located on a flexible element. The flexible element has a circular shape.

Figure 2b illustrates a scheme of the bottom view of the flexible element with a circular shape in a multi-axis force sensor. The multi-axis force sensor comprises three pairs of piezoresistors.

Figure 3a illustrates a possible architecture of a multi-axis force sensor comprising a mass element located on a flexible element. The flexible element has a triangle shape.

Figure 3b illustrates a scheme of the bottom view of the flexible element with a triangle shape in a multi-axis force sensor. The multi-axis force sensor comprises three pairs of piezoresistors.

Figure 4a illustrates a possible architecture of a multi-axis force sensor comprising a mass element located on a flexible element. The flexible element has a square shape.

Figure 4b illustrates a scheme of the bottom view of the flexible element with a square shape in a multi-axis force sensor. The multi-axis force sensor comprises four pairs of piezoresistors.

Figure 5 illustrates an example of a side view of a multi-axis force sensor comprising a substrate. The set of electrical connections extends from the substrate to the set of contact points.

Figure 6a illustrates a multi-axis force sensor subjected to a force applied along the z-axis.

Figure 6b illustrates a side view of the multi-axis force sensor which is subjected to a force applied along the z-axis.

Figure 7a illustrates a multi-axis force sensor subjected to a force applied along the x-axis.

Figure 7b illustrates a side view of the multi-axis force sensor which is subjected to a force applied along the x-axis.

Figure 8a illustrates a possible arrangement of electrical connections in a multi-axis force sensor having three pairs of piezoresistors.

Figure 8b illustrates another possible arrangement of the electrical connections in a multi-axis force sensor having three pairs of piezoresistors.

Figure 9a illustrates a possible arrangement of electrical connections in a multi-axis force sensor having four pairs of piezoresistors.

Figure 9b illustrates another possible arrangement of the electrical connections in a multi-axis force sensor having four pairs of piezoresistors.

Figure 10a illustrates an example of a sectional view of a multi-axis force sensor with a flexible element having a multi-layer structure.

Figure 10b illustrates an example of the arrangement of electrical connections in a multi-axis force sensor with a flexible element having a multi-layer structure.

Figures 11a-f illustrate an example of the fabrication process of a force sensor.

DETAILED DESCRIPTION OF THE DISCLOSURE

The disclosure describes a multi-axis force sensor comprising a flexible element, wherein the flexible element has a center and one or more edges and wherein the flexible element comprises a central area surrounding the center and a peripheral area adjacent to the one or more edges. The flexible element defines a horizontal xy-plane and a vertical z-direction which is perpendicular to the xy-plane, and the flexible element has a top surface and a bottom surface. The multi-axis force sensor further comprises a mass element, wherein the mass element is located on the top surface of the flexible element in the central area so that the flexible element bends in a particular direction when a force acts on the mass element. The multi-axis force sensor further comprises at least three pairs of piezoresistors wherein the pairs of piezoresistors are located on the bottom surface of the flexible element, and the pairs of piezoresistors are symmetrically arranged in the xy-plane around the center of the flexible element so that each pair of piezoresistors has an end in the central area of the flexible element and another end in the peripheral area of the flexible element. Each pair of piezoresistors comprises an inner piezoresistor and an outer piezoresistor connected in series, and each pair of piezoresistors comprises a set of contact points. The set of contact points comprises a central contact point in the central area of the flexible element, a peripheral contact point in the peripheral area of the flexible element, and a middle contact point between the inner piezoresistor and the outer piezoresistor so that the inner piezoresistor is connected between the central contact point and the middle contact point, and the outer piezoresistor is connected between the middle contact point and the peripheral contact point. The multi-axis force sensor further comprises a set of electrical connections, and the set of electrical connections brings to each set of contact points a measurement contact, a high-voltage contact, and a low-voltage contact. Each measurement contact is brought to the middle contact point in the set of contact points. The multi-axis force sensor may be a three-axis sensor. The mass element, which may also be called a rigid post element, transmits the applied mechanical force in the x-direction (Fx), y-direction (Fy) and z-direction (Fz) to the flexible element. Each measurement contact is used to measure the voltage at the middle contact which is connected to it.

The plane defined by the x- and y-axes is parallel to the plane of the flexible element in the rest position, i.e., when no force acts on the mass element. The direction defined by the z-axis is perpendicular to the same flexible element. The multi-axis force sensor is intended to be mounted, for example onto an external object. The flexible element could be attached to the surface of the external object. That external object could be oriented in any manner. Words such as "bottom" and "top", "above", "below", "horizontal" and "vertical" do not refer to the orientation of the device with regard to the direction of earth's gravitational field either when the device is manufactured or when it is in use. The expressions "above" and "below" refer here to positions along the z-axis. The expression "horizontal" refers here to a position that is parallel to the xy-plane, whereas the expression "vertical" refers to a position that is perpendicular to the xy-plane.

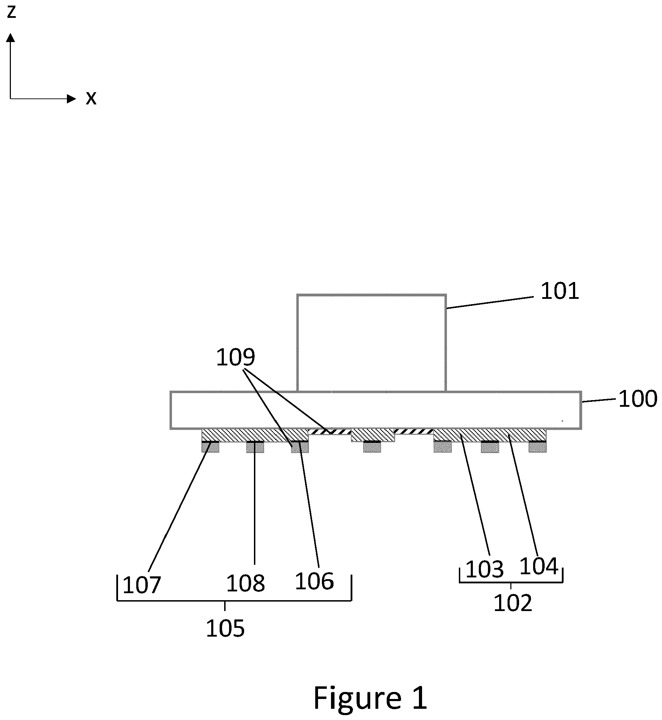

Figure 1 illustrates an example of a sectional view of a multi-axis force sensor. The multi-axis force sensor comprises a flexible element 100 to which a mass element 101 is attached. The multi-axis force sensor further comprises at least three pairs of piezoresistors 102 located on the bottom surface of the flexible element 100. Each pair of piezoresistors 102 comprises an inner piezoresistor 103 and an outer piezoresistor 104 connected in series. Each pair of piezoresistors 102 further comprises a set of contact points 105. The set of contact points 105 comprises a central contact point 106, a peripheral contact point 107 and a middle contact point 108. The multi-axis force sensor further comprises a set of electrical connections 109.

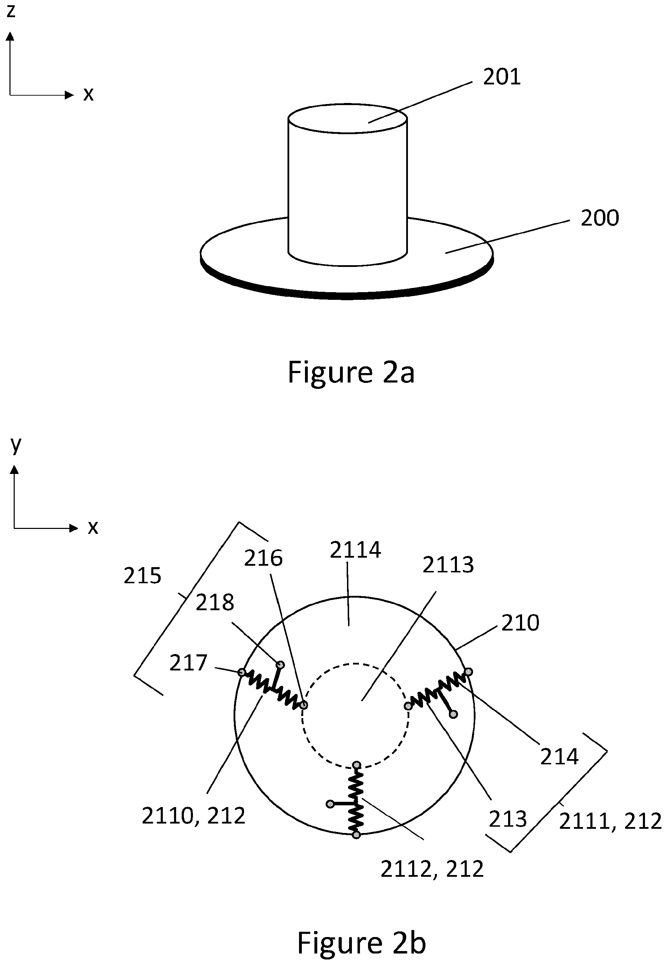

Figure 2a illustrates schematically a possible architecture of a multiple-axis sensor comprising three pairs of piezoresistors. The sensor comprises a flexible element 200 and a mass element 201 located on the top surface, central area, of the flexible element 200. The flexible element 200 has a circular shape whereas the mass element 201 has a cylindrical shape. Reference numbers 200 and 201 in figure 2a correspond to reference numbers 100 and 101, respectively, in figure1.

Figure 2b illustrates a scheme of the bottom view of the flexible element 210 having a circular shape. The multi-axis force sensor comprises a first pair of piezoresistors 2110, a second pair of piezoresistors 2111, and a third pair of piezoresistors 2112. Each pair of piezoresistors 212 comprises an inner piezoresistor 213 and an outer piezoresistor 214 connected in series. The pairs of piezoresistors 212 are symmetrically arranged in the xy-plane around the center of the flexible element 210 so that each pair of piezoresistors has an end in the central area of the flexible element 2113 and another end in the peripheral area of the flexible element 2114. In other words, the first pair of piezoresistors 2110 forms a 120° angle with the second pair of piezoresistors 2111, and the second pair of piezoresistors 2111 forms a 120° angle with the third pair of piezoresistors 2112. Each pair of piezoresistors 212 also comprises a set of contact points 215 which comprises a central contact point 216, a peripheral contact point 217, and a middle contact point 218 between the inner piezoresistor 213 and the outer piezoresistor 214. Reference number 210, 212, 213, 214, 215, 216, 217 and 218 in figure 2b correspond to reference numbers 100, 102, 103, 104, 105, 106, 107 and 108, respectively, in figure 1.

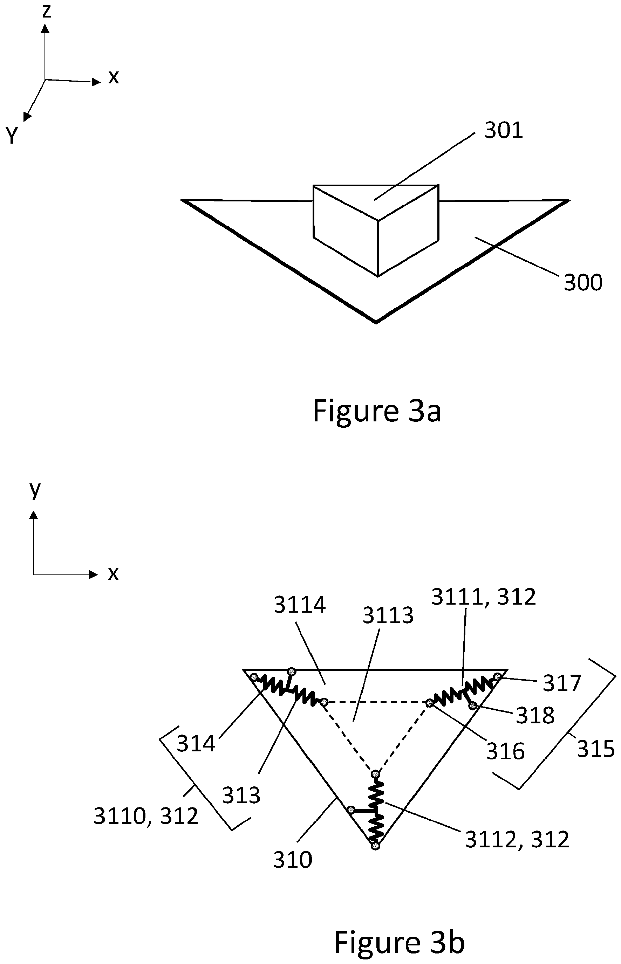

Figure 3a illustrates schematically another possible architecture of a multiple-axis sensor comprising three pairs of piezoresistors. The sensor comprises a flexible element 300 and a mass element 301 located on the top surface of the flexible element 300. The flexible element 300 has a triangular shape whereas the mass element 301 has a triangular prism shape. Reference numbers 300, 301 in figure 3a correspond to reference numbers 200, 201, respectively, in figure 2a and to reference numbers 100, 101, respectively, in figure 1.

Figure 3b illustrates a scheme of the bottom view of the flexible element 310 having a triangular shape. The multi-axis force sensor comprises a first pair of piezoresistors 3110, a second pair of piezoresistors 3111, and a third pair of piezoresistors 3112. Each pair of piezoresistors 312 comprises an inner piezoresistor 313 and an outer piezoresistor 314 connected in series. The pairs of piezoresistors 312 are symmetrically arranged in the xy-plane around the center of the flexible element 310 so that each pair of piezoresistors has an end in the central area of the flexible element 3113 and another end in the peripheral area of the flexible element 3114. In other words, the first pair of piezoresistors 3110 forms a 120° angle with the second pair of piezoresistors 3111, and the second pair of piezoresistors 3111 forms a 120° angle with the third pair of piezoresistors 3112. Each pair of piezoresistors 312 also comprises a set of contact points 315 which comprises a central contact point 316, a peripheral contact point 317, and a middle contact point 318. Reference numbers 310, 312, 313, 314, 315, 316, 317, 318, 3110, 3111 and 3112 in figure 3b correspond to reference numbers 210, 212, 213, 214, 215, 216, 217, 218, 2110, 2111 and 2112, respectively, in figure 2b.

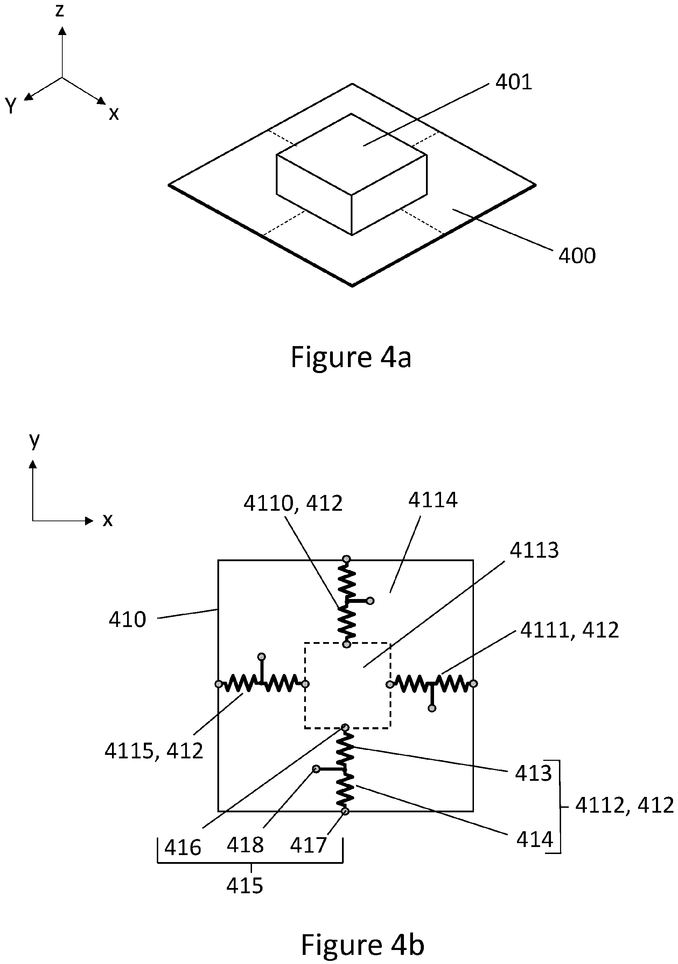

Figure 4a illustrates schematically a possible architecture of a multiple-axis sensor comprising four pairs of piezoresistors. The sensor comprises a flexible element 400 and a mass element 401 located on the top surface, central area, of the flexible element 400. The flexible element 400 has a square shape whereas the mass element 401 has a cuboid shape. The mass element 401 may have a cubic shape. Reference numbers 400, 401 in figure 4a correspond to reference numbers 200, 201, respectively, in figure 2a and to reference numbers 300, 301, respectively, in figure 3a.

Figure 4b illustrates a scheme of the bottom view of the flexible element 410 having a square shape. The multi-axis force sensor comprises a first pair of piezoresistors 4110, a second pair of piezoresistors 4111, a third pair of piezoresistors 4112 and a fourth pair of piezoresistors 4115. Each pair of piezoresistors 412 comprises an inner piezoresistor 413 and an outer piezoresistor 414 connected in series. The pairs of piezoresistors 412 are symmetrically arranged in the xy-plane around the center of the flexible element 410 so that each pair of piezoresistors 412 has an end in the central area of the flexible element 4113 and another end in the peripheral area of the flexible element 4114. In other words, the first pair of piezoresistors 4110 and the third pair of piezoresistors 4112 are arranged opposite to each other on different sides of the central section, simultaneously, the second pair of piezoresistors 4111 and the fourth pair of piezoresistors 4115 are also arranged opposite to each other on different sides of the central section. The first pair of piezoresistors 4110 forms a 90° angle with the second pair of piezoresistors 4111, the second pair of piezoresistors 4111 forms a 90° angle with the third pair of piezoresistors 4112, and the third pair of piezoresistors 4112 forms a 90° angle with the fourth pair of piezoresistors 4115. In this example, the first pair of piezoresistors 4110 and the third pair of piezoresistors 4112 are substantially aligned along the y-axis whereas the second pair of piezoresistors 4111 and the fourth pair of piezoresistors 4115 are substantially aligned along the x-axis. Each pair of piezoresistors 412 also comprises a set of contact points 415 which comprises a central contact point 416, a peripheral contact point 417, and a middle contact point 418 between the inner piezoresistor 413 and the outer piezoresistor 414. Reference numbers 410, 412, 413, 414, 415, 416, 417 and 418 in figure 4b correspond to reference numbers 210, 212, 213, 214, 215, 216, 217 and 218, respectively, in figure 2b and to reference numbers 310, 312, 313, 314, 315, 316, 317 and 318, respectively, in figure 3b.

The multi-axis force sensor may further comprise a substrate below the piezoresistors. All electrical connections in the set of electrical connections may extend from the substrate to the sets of contact points.

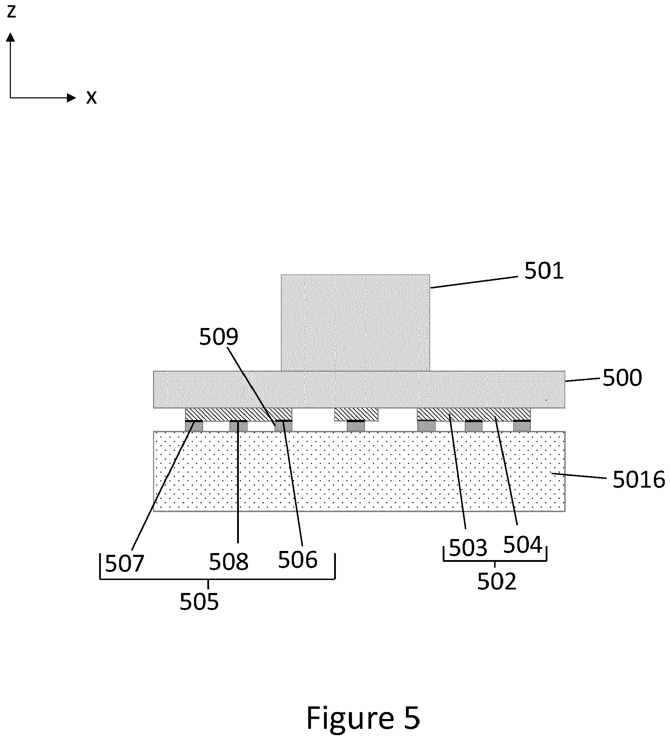

Figure 5 illustrates an example of a side view of a multi-axis force sensor comprising a substrate 5016 arranged below a flexible element 500 and a mass element 501 located on the top surface of the flexible element 500. The flexible element 500 may have a square shape whereas the mass element 501 may have a cuboid shape. Alternatively, the flexible element 500 may have another shape such as circular or triangle shape whereas the mass element 501 may have another shape such as cubic, cylindrical, or triangular prism shape. The device shown in figure 5 can be implemented with any of the embodiments shown in figures 2-4. The multi-axis force sensor further comprises at least three pairs of piezoresistors 502 comprising an inner piezoresistor 503 and an outer piezoresistor 504 connected in series. The substrate 5016 is electrically connected to the pairs of piezoresistors 502 through a set of electrical connections 509. The set of electrical connections 509 extends from the substrate 5016 to the set of contact points 505. Reference numbers 500, 501 in figure 5 correspond to reference numbers 200, 201, respectively, in figure 2a and to reference numbers 300, 301, respectively, in figure 3a, and to reference numbers 400, 401, respectively, in figure 4a. Reference numbers 502, 503, 504, 505, 506, 507, 508 correspond to reference numbers 212, 213, 214, 215, 216, 217, 218, respectively, in figure 2b, and to reference numbers 312, 313, 314, 315, 316, 317, 318, respectively, in figure 3b, and to reference numbers 412, 413, 414, 415, 416, 417, 418, respectively, in figure 4b.

When a force acts on the multi-axis force sensor, the flexible element bends inducing stress in the piezoresistors. Depending on the force direction and consequently on the bending direction, the electrical resistance of the piezoresistors changes. The change in electrical resistance may be measured using an electric bridge in which the piezoresistors can be electrically biased through the set of electrical connections. The change in electrical resistance can be after that converted into a measurable output voltage.

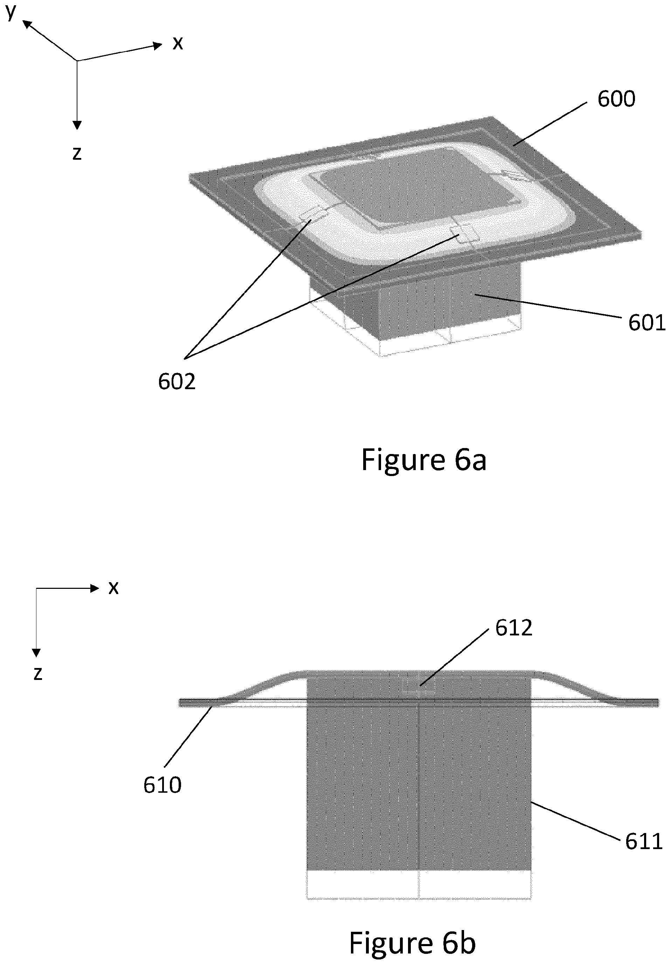

Figure 6a illustrates a multi-axis force sensor subjected to a force applied along the z-axis. The multi-axis force sensor comprises a mass element 601 attached to a flexible element 600. The multi-axis force sensor further comprises pairs of piezoresistors 602 located on the bottom surface of the flexible element 600. When the force acts on the mass element 601 along the z-axis, the flexible element 600 flexes leading to a change in the electrical resistance of the piezoresistors 602. Reference numbers 600 and 601 in figure 6a correspond to reference numbers 400 and 401, respectively, in figure 4a. Reference number 602 in figure 6a corresponds to reference number 412 in figure 4b.

Figure 6b illustrates a side view of the multi-axis force sensor which is subjected to a force applied along the z-axis. The force applied on the mass element 611 results in the bending of the flexible element 610 and the piezoresistors 612 in the z-direction. Reference numbers 610, 611 and 612 in figure 6b correspond to reference numbers 600, 601 and 602, respectively, in figure 6a.

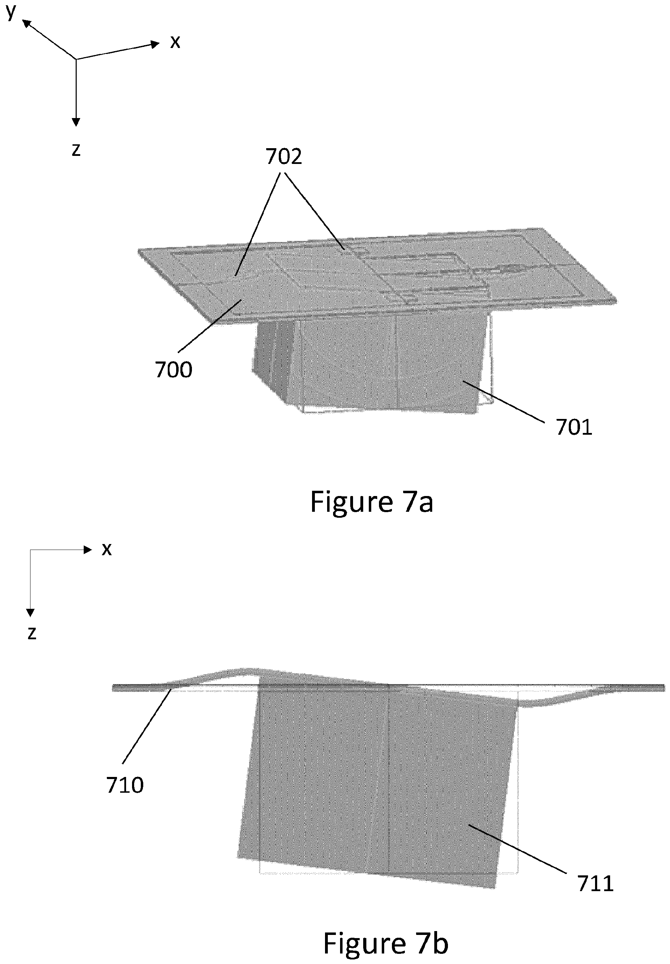

Figure 7a illustrates a multi-axis force sensor subjected to a force applied along the x-axis. The multi-axis force sensor comprises a mass element 701 attached to a flexible element 700. The multi-axis force sensor further comprises pairs of piezoresistors 702 located on the bottom surface of the flexible element 700. When the force acts on the mass element 701 along the x-axis, the flexible element 700 bends in the xz-plane leading to a change in the electrical resistance of the piezoresistors 702. Reference numbers 700, 701 and 702 in figure 7a correspond to reference numbers 600, 601 and 602, respectively, in figure 6a.

Figure 7b illustrates a side view of the multi-axis force sensor which is subjected to a force applied along the x-axis. The force applied on the mass element 711 results in the bending of the flexible element 710 in the xz-plane. Reference numbers 710 and 711 in figure 7b correspond to reference numbers 700 and 701, respectively, in figure 7a.

Each pair of piezoresistors is connected to one measurement contact. Each pair of piezoresistors may be connected to an independent high voltage contact and to an independent low voltage contact. Alternatively, each pair of piezoresistors may be connected to a shared high voltage contact and/or a shared low voltage contact. "Independent high voltage contact" refers to an arrangement in which the contact points are electrically connected to separate high voltage contacts. "Independent low voltage contact" refers to an arrangement in which the contact points are electrically connected to separate low voltage contacts. "Shared high voltage contact" refers to an arrangement in which the contact points are electrically connected to the same high voltage contact via the electrical connections. "Shared low voltage contact" refers to an arrangement in which the contact points are electrically connected to the same low voltage contact via the electrical connections. These options apply to all embodiments in this disclosure.

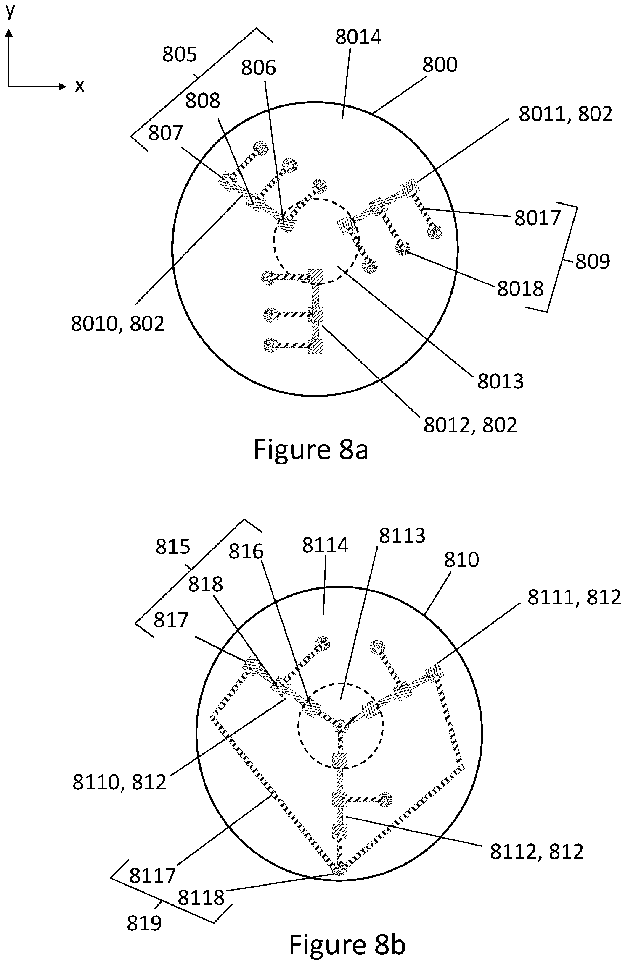

Figure 8a illustrates a possible arrangement of electrical connections in a multi-axis force sensor having three pairs of piezoresistors 802. The multi-axis force sensor comprises a first pair of piezoresistors 8010, a second pair of piezoresistors 8011, and a third pair of piezoresistors 8012. The pairs of piezoresistors 802 are symmetrically arranged in the xy-plane around the center of the flexible element 800 so that each pair of piezoresistors has an end in the central area of the flexible element 8013 and another end in the peripheral area of the flexible element 8014. In other words, the first pair of piezoresistors 8010 forms a 120° angle with the second pair of piezoresistors 8011, and the second pair of piezoresistors 8011 forms a 120° angle with the third pair of piezoresistors 8012. Each pair of piezoresistors 802 comprises a set of contact points 805 which comprises a central contact point 806, a peripheral contact point 807, and a middle contact point 808. The multi-axis force sensor further comprises a set of electrical connections 809 which may comprise a subset of in-plane connections 8017 laid in the xy-plane and a subset of out-of-plane connections 8018 extending along the z-axis. Alternatively, the set of electrical connections 809 could comprise only out-of-plane 8018 connections.

The set of electrical connections 809 may be made of a variety of metals that include but are not limited to Al, Cu, Ag, Au, Pt, Pd, Mo or metal alloys. They may be formed by a variety of deposition methods such as sputtering, chemical vapor deposition, molecular beam epitaxy, electron beam physical vapor evaporation, or laser metal deposition. These options apply to all embodiments in this disclosure. For example, on one hand the peripheral contact points 807 of the first pair, the second pair and the third pair of piezoresistors may be connected to a fixed low voltage contact. On the other hand, the central contact points 806 of the first pair, the second pair, and the third pair of piezoresistors may be connected to a fixed high voltage contact. The low voltage contact may be a ground contact. This option applies to all embodiments in this disclosure. Each middle contact point 808 is connected to a measurement contact via the electrical connections 809. The voltage V between a low voltage contact point and high voltage contact point may for example be set at 3, 4, or 5 V. This option applies to all embodiments in this disclosure. Reference numbers 800, 802, 805, 806, 807, 808, 8010, 8011 and 8012 in figure 8a correspond to reference numbers 210, 212, 215, 216, 217, 218, 2110, 2111, and 2112, respectively, in figure 2b and to reference numbers 310, 312, 315, 316, 317, 318, 3110, 3111 and 3112, respectively, in figure 3b.

When no force acts on the mass element, the voltage value V0 at the middle contact point between the inner piezoresistor and the outer piezoresistor in each pair of piezoresistors equals

$$V0 = \frac{1}{2}V$$

When a force is applied on the mass element, a change in the electrical resistance of the piezoresistors leads to a change in the voltage value at the middle contact point in each pair of piezoresistors. Assuming that the applied force bends the flexible element in the z-axis direction, and considering that the initial resistance value of each piezoresistor is R and that the change in the resistance is ∆R, the voltages V1, V2 and V3 at the middle contact point in the first pair of piezoresistors, the second pair of piezoresistors and the third pair of piezoresistors, respectively, are

$$V1 = V2 = V3 = \frac{1}{2}V + \frac{1}{2}\frac{\Delta R}{R}V$$

The change in the voltage at the middle contact point in the first pair of piezoresistors, the second pair of piezoresistors and the third pair of piezoresistors can consequently be written as

$$\Delta V1 = V1 - V0 = \frac{1}{2}\frac{\Delta R}{R}V$$

$$\Delta V2 = V2 - V0 = \frac{1}{2}\frac{\Delta R}{R}V$$

$$\Delta V3 = V3 - V0 = \frac{1}{2}\frac{\Delta R}{R}V$$

Subsequently, the signal voltages in the x-axis, y-axis and z-axis directions can be calculated as follows

$$Vx = (V2 - V1) = 0$$

$$Vy = \Delta V1 + \Delta V2 - \Delta V3 = \frac{\Delta R}{R}V$$

$$Vz = \Delta V1 + \Delta V2 + \Delta V3 = \frac{3}{2}\frac{\Delta R}{R}V$$

When the applied force bends the flexible element in the y-axis direction, the voltages V1, V2 and V3 at the middle contact point in the first pair of piezoresistors, the second pair of piezoresistors and the third pair of piezoresistors, respectively, are

$$V1 = \frac{1}{2}V + \frac{1}{2}\frac{\Delta R}{R}V$$

$$V2 = \frac{1}{2}V - \frac{1}{2}\frac{\Delta R}{R}V$$

$$V3 = \frac{1}{2}V$$

The change in the voltage at the middle contact point in the first pair of piezoresistors, the second pair of piezoresistors and the third pair of piezoresistors, respectively, can consequently be written as

$$\Delta V1 = V1 - V0 = \frac{1}{2}\frac{\Delta R}{R}V$$

$$\Delta V2 = V2 - V0 = -\frac{1}{2}\frac{\Delta R}{R}V$$

$$\Delta V3 = V3 - V0 = 0$$

Subsequently, the signal voltages in the x-axis, y-axis and z-axis directions can be calculated as

$$Vx = \Delta V1 - \Delta V2 = \frac{1}{2}\frac{\Delta R}{R}V$$

$$Vy = \Delta V1 + \Delta V2 - \Delta V3 = 0$$

$$Vz = \Delta V1 + \Delta V2 + \Delta V3 = 0$$

Assuming that the applied force bends the flexible element in the x-axis direction, the voltages V1, V2 and V3 at the middle contact point in the first pair of piezoresistors, the second pair of piezoresistors and the third pair of piezoresistors, respectively, are

$$V1 = \frac{1}{2}V + \frac{1}{2}\frac{\Delta R}{R}V$$

$$V2 = \frac{1}{2}V + \frac{1}{2}\frac{\Delta R}{R}V$$

$$V3 = \frac{1}{2}V - \frac{1}{2}\frac{\Delta R}{R}V$$

The change in the voltage at the middle contact point in the first pair of piezoresistors, the second pair of piezoresistors and the third pair of piezoresistors, respectively, can consequently be written as

$$\Delta V1 = V1 - V0 = \frac{1}{4}\frac{\Delta R}{R}V$$

$$\Delta V2 = V2 - V0 = \frac{1}{4}\frac{\Delta R}{R}V$$

$$\Delta V3 = V3 - V0 = -\frac{1}{2}\frac{\Delta R}{R}V$$

Subsequently, the signal voltages in the x-axis, y-axis and z-axis directions can be calculated as

$$Vx = (V1 - V2) = 0$$

$$Vy = \Delta V1 + \Delta V2 - \Delta V3 = \frac{\Delta R}{R}V$$

$$Vz = \Delta V1 + \Delta V2 + \Delta V3 = 0$$

The signal voltages Vx, Vy, and Vz can be captured with an electronic measurement circuit. The measurement circuit may consist of differential and summing amplifiers that directly output the voltages based on input voltages V1, V2, V3, and V0 accordingly. The measurement circuit may also be based on digital processing where input voltages are captured using analogue to digital converters and the signal voltages are computed using a microcontroller.

The at least three pairs of piezoresistors may comprise a first pair of piezoresistors, a second pair of piezoresistors, and a third pair of piezoresistors. The set of electrical connections may comprise a subset of in-plane connections. The peripheral contact points of the first pair, the second pair and the third pair of piezoresistors may be connected to a shared low voltage contact through the subset of in-plane connections, and the central contact points of the first pair, the second pair and the third pair of piezoresistors may be connected to a shared high voltage contact though the subset of in-plane connections.

Figure 8b illustrates another possible arrangement of the electrical connections in a multi-axis force sensor having three pairs of piezoresistors 812 which are symmetrically arranged in the xy-plane around the center of the flexible element 810. The multi-axis force sensor further comprises a set of electrical connections 819 which may comprise a subset of in-plane connections 8117 and a subset of out-of-plane connections 8118. On one hand the peripheral contact points 817 of the first pair, the second pair and the third pair of piezoresistors may be connected to a shared low voltage contact and on the other hand, the central contact points 816 of the first pair, the second pair, and the third pair of piezoresistors may be connected to a shared high voltage contact. Each middle contact point 818 is connected to a measurement contact. Reference numbers 810, 812, 815, 816, 817, 818, 8110, 8111, 8112, 8113 and 8114, in figure 8b correspond to reference numbers 800, 802, 805, 806, 807, 808, 8010, 8011, 8012, 8013, and 8014, respectively, in figure 8a.

The at least three pairs of piezoresistors may comprise a first pair of piezoresistors, a second pair of piezoresistors, a third pair of piezoresistors and a fourth pair of piezoresistors. The first pair and the third pair of piezoresistors are arranged opposite to each other on different sides of the central section, and the second pair and the fourth pair of piezoresistors are arranged opposite to each other on different sides of the central section. The set of electrical connections may comprise a subset of in-plane connections. The peripheral contact points of the first pair and the third pair of piezoresistors and the central contact points of the second pair and the fourth pair of piezoresistors may be connected to a shared low voltage contact through the subset of in-plane connections, and the central contact points of the first pair and the third pair of piezoresistors and the peripheral contact points of the second pair and the fourth pair of piezoresistors may be connected to a shared high voltage contact through the subset of in-plane connections.

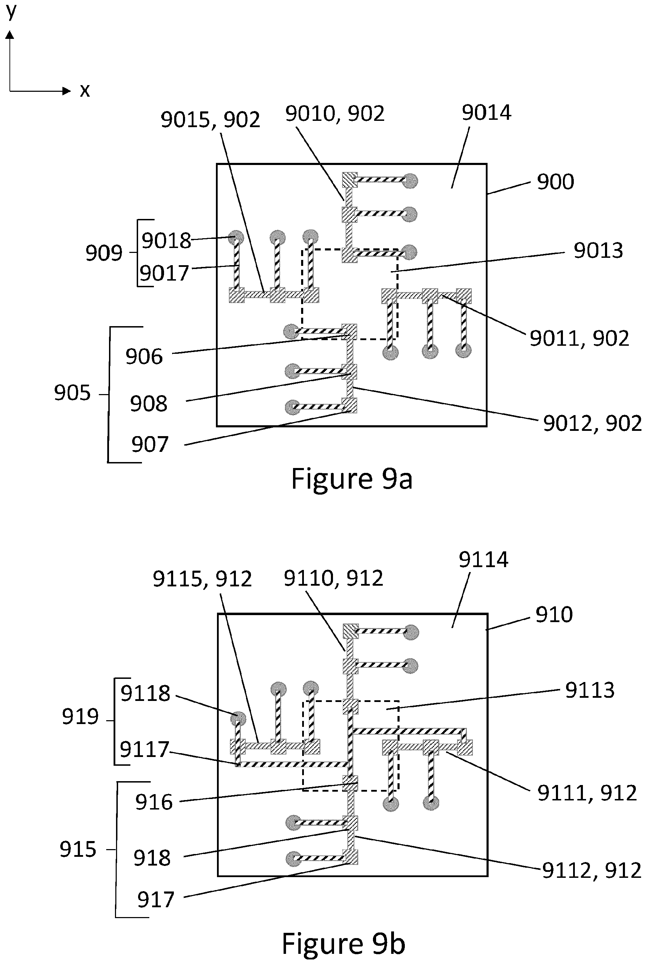

Figure 9a illustrates a possible arrangement of electrical connections in a multi-axis force sensor having four pairs of piezoresistors 902. The multi-axis force sensor comprises a first pair of piezoresistors 9010, a second pair of piezoresistors 9011, a third pair of piezoresistors 9012 and a fourth pair of piezoresistors 9015. The pairs of piezoresistors 902 are symmetrically arranged in the xy-plane around the center of the flexible element 900 so that each pair of piezoresistors 902 has an end in the central area of the flexible element 9013 and another end in the peripheral area of the flexible element 9014. In other words, the first pair of piezoresistors 9010 and the third pair of piezoresistors 9012 are arranged opposite to each other on different sides of the central section, simultaneously, the second pair of piezoresistors 9011 and the fourth pair of piezoresistors 9015 are also arranged opposite to each other on different sides of the central section. The first pair of piezoresistors 9010 forms a 90° angle with the second pair of piezoresistors 9011, the second pair of piezoresistors 9011 forms a 90° angle with the third pair of piezoresistors 9012, and the third pair of piezoresistors 9012 forms a 90° angle with the fourth pair of piezoresistors 9015. Each pair of piezoresistors 902 comprises a set of contact points 905 which comprises a central contact point 906, a peripheral contact point 907, and a middle contact point 908. The multi-axis force sensor further comprises a set of electrical connections 909 which may comprise a subset of in-plane connections 9017 and a subset of out-of-plane connections 9018.

For example, the peripheral contact points 907 of the first pair 9010 and the third pair 9012 of piezoresistors and the central contact points 906 of the second pair 9011 and the fourth pair 9015 of piezoresistors may be connected to a low voltage contact. Simultaneously, the central contact points 906 of the first pair 9010 and the third pair 9012 of piezoresistors and the peripheral contact points 907 of the second pair 9011 and the fourth pair 9015 of piezoresistors may be connected to a high voltage contact. Each middle contact point is connected to a measurement contact. In this example, all high voltage and low voltage contacts are independent. Reference numbers 900, 902, 905, 906, 907, 908, 9010, 9011, 9012, 9013, 9014 and 9015 in figure 9a correspond to reference numbers 410, 412, 415, 416, 417, 418, 4110, 4111, 4112, 4113, 4114 and 4115, respectively, in figure 4b.

Figure 9b illustrates another possible arrangement of the electrical connections in a multi-axis force sensor having four pairs of piezoresistors 912. The peripheral contact points 917 of the first pair 9110 and the third pair 9112 of piezoresistors and the central contact points 916 of the second pair 9111 and the fourth pair 9115 of piezoresistors may also be connected to a low voltage contact. The central contact points 916 of the first pair 9110 and the third pair 9112 of piezoresistors and the peripheral contact points 917 of the second pair 9111 and the fourth pair 9115 of piezoresistors may be connected to a high voltage contact. The set of electrical connections 919 may comprise a subset of in-plane connections 9117 and a subset of out-of-plane connections 9118. In this example, all low voltage contacts are independent contacts whereas the high voltage contact is a shared contact via the in-plane connections 9117. Each middle contact point 918 is connected to a measurement contact via the electrical connections 919. Reference numbers 910, 912, 915, 916, 917, 918, 9110, 9111, 9112, 9113, 9114 and 9115 in figure 9b correspond to reference numbers 900, 902, 905, 906, 907, 908, 9010, 9011, 9012, 9013, 9014 and 9015, respectively, in figure 9a.

When no force acts on the mass element, the voltage value at the middle contact point between the inner piezoresistor and the outer piezoresistor in each pair of piezoresistors V0 equals

$$V0 = \frac{1}{2}V$$

When a force is applied on the mass element, a change in electrical resistance of the piezoresistors leads to a change in the voltage value at the middle contact point in each pair of piezoresistors. Assuming that the applied force bends the flexible element in the z-axis direction, and considering that the initial resistance value of each piezoresistor is R and the change in the resistance is ΔR, the voltages V1, V2, V3 and V4 at the middle contact point in the first pair of piezoresistors, the second pair of piezoresistors, the third pair of piezoresistors and the fourth pair of piezoresistors, respectively, are

$$V1 = \frac{1}{2}V + \frac{1}{2}\frac{\Delta R}{R}V$$

$$V2 = \frac{1}{2}V - \frac{1}{2}\frac{\Delta R}{R}V$$

$$V3 = \frac{1}{2}V + \frac{1}{2}\frac{\Delta R}{R}V$$

$$V4 = \frac{1}{2}V - \frac{1}{2}\frac{\Delta R}{R}V$$

Consequently, the signal voltage in the z-axis direction is

$$Vz = (V1 - V4) + (V3 - V2) = \frac{1}{2}2\frac{\Delta R}{R}V$$

If the applied force is in the x-axis direction, the voltages V1, V2, V3 and V4 at the middle contact point in the first pair of piezoresistors, the second pair of piezoresistors, the third pair of piezoresistors, and the fourth pair of piezoresistors, respectively, are

$$V1 = 0$$

$$V2 = \frac{1}{2}V + \frac{1}{2}\frac{\Delta R}{R}V$$

$$V3 = 0$$

$$V4 = \frac{1}{2}V - \frac{1}{2}\frac{\Delta R}{R}V$$

Consequently, the signal voltage in the x-axis direction is

$$Vx = (V4 - V2) = \frac{\Delta R}{R}V$$

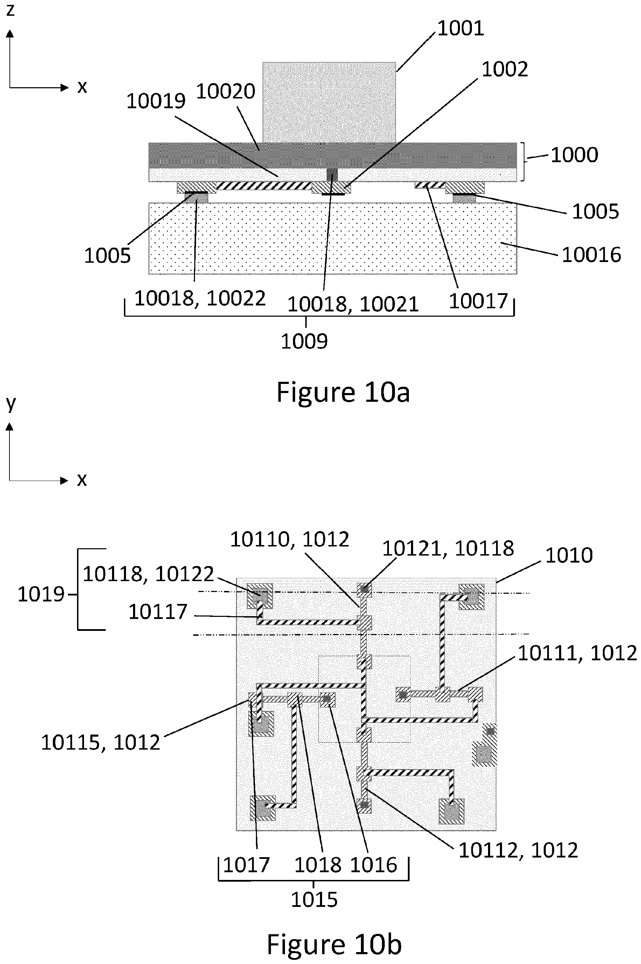

Figure 10a illustrates an example of a sectional view of a multi-axis force sensor with a flexible element having a multilayer structure. Such structure may be fabricated using semiconductor technology. The flexible element 1000 may have a multilayer structure comprising at least one dielectric layer 10019 forming the bottom surface of the flexible element and at least one semiconductor layer 10020 on top of the dielectric layer. The set of electrical connections 1009 may comprise a subset of out-of-plane connections 10018 comprising one or more electrical vias 10021 in the dielectric layer 10019 wherein the one or more electrical vias 10021 are connected to either the central contact point or the peripheral contact point in each set of contact points 1005. The one or more electrical vias 10021 may be ground connections. The set of electrical connections 1009 may also comprise a subset of in-plane connections 10017. A multi-layer structure refers here to a structure comprising at least two thin film material layers, wherein one layer is deposited on top of the other layer. The layers may be semiconductor layers or dielectric layers.

Alternatively, one layer may be a semiconductor layer and the other layer may be a dielectric layer. The layers may be formed by methods including, but not limited to, thermal evaporation, molecular beam epitaxy, chemical vapor deposition, sputtering, atomic layer deposition. The semiconductor layer may be, but is not limited to, silicon layer. The dielectric layer may be, but is not limited to, SiO2 layer. The piezoresistors may be made of a semiconductor material such as silicon. These options may apply to any embodiment is this disclosure. The multi-axis force sensor may further comprise a substrate 10016 below the piezoresistors 1002 and the subset of out-of-plane connections 10018 may further comprise one or more electrical interconnectors 10022 which extend from the substrate 10016 to the sets of contact points 1005. The expression "electrical interconnector" refers here to an electrical conductor or contact that connects electrically the substrate with one or more piezoresistors. The one or more electrical interconnectors 10022 may be signal connections. The electrical interconnectors may be made of a variety of metals that include but are not limited to Al, Cu, Ag, Au, Pt, Pd, Mo or metal alloys. The metals may be formed by a variety of deposition methods such as sputtering, chemical vapor deposition, molecular beam epitaxy, electron beam physical vapor evaporation, or laser metal deposition. These options apply to all embodiments in this disclosure. Reference numbers 1000, 1001, 1002, and 1005 in figure 10a correspond to reference numbers 500, 501, 502, and 505, respectively, in figure 5.

Figure 10b illustrates a possible arrangement of electrical connections in a multi-axis force sensor with a flexible element having a multi-layer structure. The dash lines show the section of the device that is illustrated on figure 10a. The multi-axis force sensor comprises a first pair of piezoresistors 10110, a second pair of piezoresistors 10111, a third pair of piezoresistors 10112 and a fourth pair of piezoresistors 10115. Each pair of piezoresistors 1012 comprises a set of contact points 1015 which comprises a central contact point 1016, a peripheral contact point 1017 and a middle contact point 1018. The multi-axis force sensor further comprises a set of electrical connections 1019 which may comprise a subset of in-plane connections 10117 and a subset of out-of-plane connections 10118. The subset of out-of-plane connections 10118 may comprise one or more electrical interconnectors 10122 and one or more electrical vias 10121.

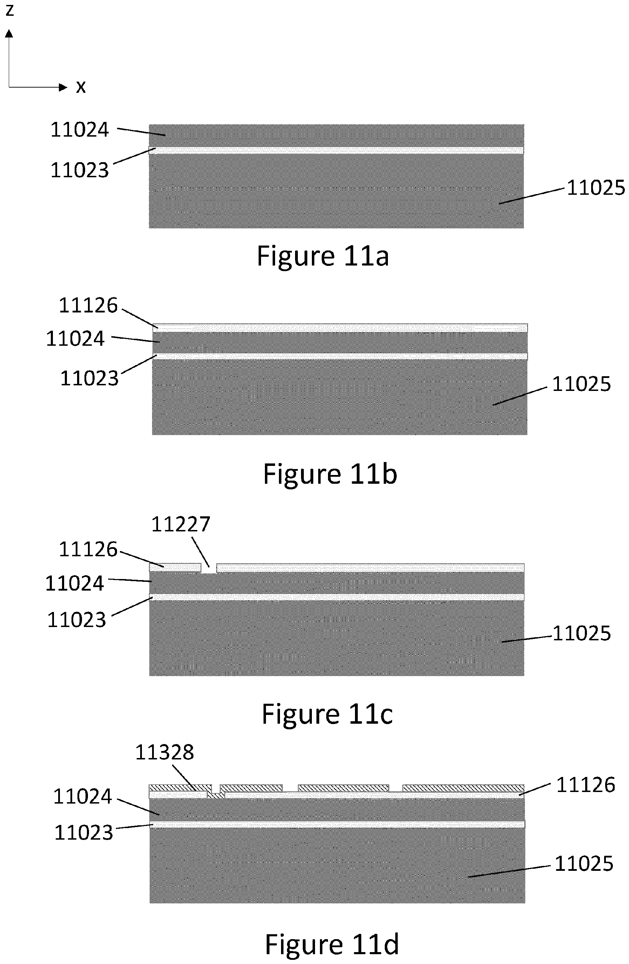

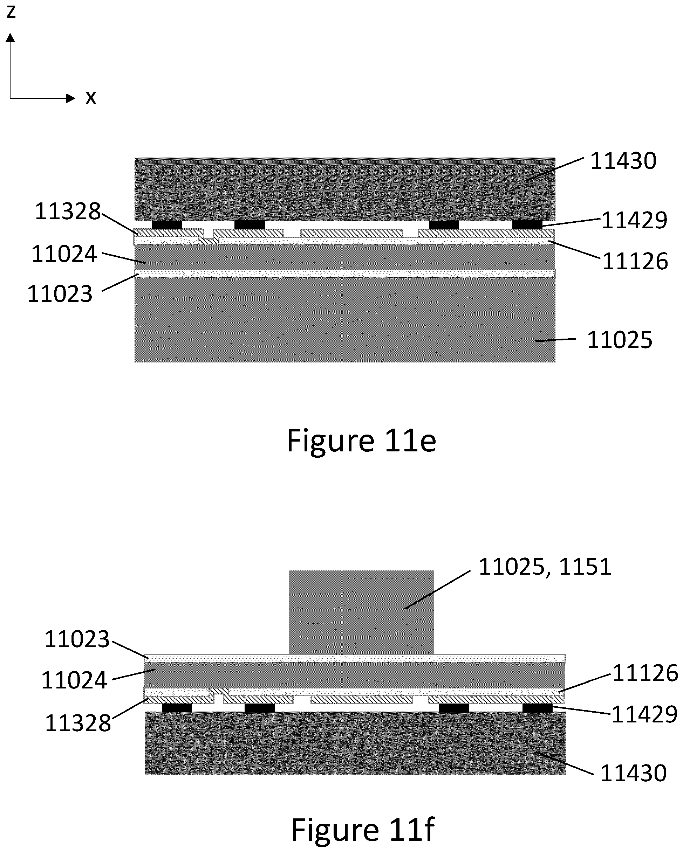

In this example, the peripheral contact points 1017 of the first pair 10110 and the third pair 10112 of piezoresistors and the central contact points 1016 of the second pair 10111 and the fourth pair 10115 of piezoresistors are connected to a shared low voltage contact. The low voltage contact is a shared ground contact through the electrical vias 10121 in the dielectric layer. Simultaneously, the central contact points 1016 of the first pair and the third pair 10112 of piezoresistors and the peripheral contact points 1017 of the second pair 10111 and the fourth pair 10115 of piezoresistors are connected to a shared high voltage contact via the in-plane electrical connections 10117 and an electrical interconnector 10122. Each middle contact point 1018 is connected to a separate measurement contact via the in-plane electrical connections 10117 and the electrical interconnectors 10122. With such configuration, the total number of electrical contacts may be reduced to six or less contacts. Reference numbers 1010, 1012, 1015 and 10121 in figure 10b correspond to reference numbers 1000, 1002, 1005 and 10021 respectively, in figure 10a. Reference numbers 1016, 1017, 1018, 10110, 10111, 10112 and 10115 in figure 10b correspond to reference numbers 916, 917, 918, 9110, 9111, 9112 and 9115, respectively, in figure 9b. Figures 11a-f show a possible fabrication process of the force sensor using micromachining steps. The process may start with the growth or deposition of a layered structure comprising a semiconductor layer 11024 and a first insulating layer 11023 on a first substrate 11025 as shown on Figure 11 a. The first substrate may be a silicon wafer. The layered structure may be a silicon on insulator layer (SOI), and the insulator may be a dielectric material such as $SiO_2$, or $Al_2O_3$, or $TiO_2$, or $T_2O_5$. The semiconductor layer thickness may for example be in the range [0.5-2] $\mu$m, or [0.75-1.5] $\mu$m, or [1-2] $\mu$m or [1-1.5] $\mu$m. The first insulating layer thickness may for example be in the range [150-1000] nm, or [200-800] nm, or [300-600] nm.

Figure 11b shows a further step in the fabrication process. A second insulating layer 11126 may be deposited on the semiconductor layer 11024. The second insulating layer 11126 may be, but is not limited to, $SiO_2$, or $Al_2O_3$, or $TiO_2$, or $T_2O_5$, or $Si_3N_4$. The second insulating layer thickness may for example be in the range [100-500] nm, or [200-400] nm, or [300-400] nm.

The first and the second insulating layers may be grown by a variety of deposition methods including but not limited to ion implantation, atomic layer deposition (ALD), metalorganic vapor phase epitaxy (MOVPE). These options apply to all embodiments in this disclosure. Figure 11c shows a further step in the fabrication process where via holes 11227 are patterned on the second insulating layer 11126.

Figure 11d shows the next step in the fabrication process where a piezoresistive 11328 layer is formed on the second insulating layer 11126. Subsequently the piezoresistive layer is patterned to form piezoresistors. The piezoresistive layer may be a semiconducting layer such as polycrystalline silicon. The piezoresistive layer thickness may for example be in the range [100-500] nm, or [200-400] nm, or [300-500] nm.

Figure 11e shows a further step in the fabrication process. A conductive layer is deposited on the piezoresistive layer 11328. The conductive layer is subsequently patterned to form electrical contacts 11429 (patterning process not shown in the figure). The full structure, which comprises the first substrate 11025, the semiconductor layer 11024, the first insulating layer 11023, the second insulating layer 11126 and the piezoresistive layer 11328, is after that bonded with a second substrate 11430 to create an electrical connection. The second substate may be a semiconductor wafer such as a silicon wafer, a glass wafer with semiconductor vias, or an ASIC wafer having analogues to digital convertors that sample the signal voltage. The conductive layer may be made of a variety of metals that include but are not limited to Al, Cu, Ag, Au, Pt, Pd, Mo or metal alloys. The metal layer may be formed by a variety of deposition methods such as sputtering, chemical vapor deposition, molecular beam epitaxy, electron beam physical vapor evaporation, or laser metal deposition. These options may apply to all embodiments in this disclosure.

Figure 11 f shows the final step of the fabrication process where the mass element 1151 is formed by etching the first substrate 11025. Reference number 1151 in figure 11f corresponds to reference number 101 in figure 1.

## Claims

1. A multi-axis force sensor comprising:

   - A flexible element, wherein the flexible element has a center and one or more edges and wherein the flexible element comprises a central area surrounding the center and a peripheral area adjacent to the one or more edges, and wherein the flexible element defines a horizontal xy-plane and a vertical z-direction which is perpendicular to the xy-plane, and wherein the flexible element has a top surface and a bottom surface,
   - a mass element, wherein the mass element is located on the top surface of the flexible element in the central area so that the flexible element bends in a particular direction when a force acts on the mass element

   **characterized in that**

   the multi-axis force sensor further comprises at least three pairs of piezoresistors wherein the pairs of piezoresistors are located on the bottom surface of the flexible element, and wherein the pairs of piezoresistors are symmetrically arranged in the xy-plane around the center of the flexible element so that each pair of piezoresistors has an end in the central area of the flexible element and another end in the peripheral area of the flexible element,
   and wherein each pair of piezoresistors comprises an inner piezoresistor and an outer piezoresistor connected in series, and wherein each pair of piezoresistors comprises a set of contact points, and the set of contact points comprises a central contact point in the central area of the flexible element, a peripheral contact point in the peripheral area of the flexible element, and a middle contact point between the inner piezoresistor and the outer piezoresistor so that the inner piezoresistor is connected between the central contact point and the middle contact point, and the outer piezoresistor is connected between the middle contact point and the peripheral contact point,
   and wherein the multi-axis force sensor further comprises a set of electrical connections, and wherein the set of electrical connections brings to each set of contact points a measurement contact, a high-voltage contact, and a low-voltage contact, and wherein each measurement contact is brought to the middle contact point in the set of contact points.

2. A multi-axis force sensor according to claims 1, wherein the multi-axis force sensor further comprises a substrate below the piezoresistors, and wherein all electrical connections in the set of electrical connections extend from the substrate to the sets of contact points.

3. A multi-axis force sensor according to claims 1, wherein the flexible element has a multilayer structure comprising at least one dielectric layer forming the bottom surface of the flexible element and at least one semiconductor layer on top of the dielectric layer, and wherein the set of electrical connections comprises a subset of out-of-plane connections comprising one or more electrical vias, and wherein the one or more electrical vias are connected to either the central contact point or the peripheral contact point in each set of contact points.

4. A multi-axis force sensor according to claim 3, wherein the multi-axis force sensor further comprises a substrate below the piezoresistors, and wherein the subset of out-of-plane connections further comprises one or more electrical interconnectors which extend from the substrate to the sets of contact points.

5. A multi-axis force sensor according to any of the previous claims, wherein the at least three pairs of piezoresistors comprise a first pair of piezoresistors, a second pair of piezoresistors, and a third pair of piezoresistors, and wherein the set of electrical connections comprises a subset of in-plane connections, and wherein the peripheral contact points of the first pair, the second pair and the third pair of piezoresistors are connected to a shared low voltage contact through the subset of in-plane connections, and the central contact points of the first pair, the second pair and the third pair of piezoresistors are connected to a shared high voltage contact though the subset of in-plane connections.

6. A multi-axis force sensor according to any of the previous claims, wherein the at least three pairs of piezoresistors comprise a first pair of piezoresistors, a second pair of piezoresistors, a third pair of piezoresistors and a fourth pair of piezoresistors, and wherein the first pair and the third pair of piezoresistors are arranged opposite to each other on different sides of the central section, and the second pair and the fourth pair of piezoresistors are arranged opposite to each other on different sides of the central section, and wherein the set of electrical connections comprises a subset of in-plane connections, and wherein the peripheral contact points of the first pair and the third pair of piezoresistors and the central contact points of the second pair and the fourth pair of piezoresistors are connected to a shared low voltage contact through the subset of in-plane connections, and the central contact points of the first pair and the third pair of piezoresistors and the peripheral contact points of the second pair and the fourth pair of piezoresistors are connected to a shared high voltage contact through the subset of in-plane connections.

7. A multi-axis force sensor according to any previous claim, wherein the low voltage contact is a ground contact.

8. A multi-axis force sensor according to any of the previous claims, wherein the piezoresistors are made of a semiconductor material.

Z

X

101

109

100

107    108    106

103  104

102

105

Figure 1

Figure 2a

Figure 2b

Z

X

Y

301

300

Figure 3a

y

x

3114    3113    3111, 312

314

3110, 312

313

310

317

318

316    315

3112, 312

Figure 3b

Figure 4a

Figure 4b

Z

X

501

509

500

5016

507    508    506    503    504

505    502

Figure 5

Figure 6a

Figure 6b

Figure 7a

Figure 7b

Figure 8a

Figure 8b

Figure 9a

Figure 9b

Figure 10a

Figure 10b

EP 4 439 028 A1

Z
X

Figure 11a

Figure 11b

Figure 11c

Figure 11d

22

Z

X

11430

11328

11429

11024

11126

11023

11025

## Figure 11e

11025, 1151

11023

11024

11126

11328

11429

11430

## Figure 11f

Europäisches
Patentamt

European
Patent Office

Office européen
des brevets

# EUROPEAN SEARCH REPORT

Application Number

EP 23 16 4762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 688 725 A1 (NITTA CORP [JP]) 9 August 2006 (2006-08-09) * the whole document * ----- | 1-8 | INV. G01L5/162 G01L1/18 G01L1/22 |
| A | WO 2011/069515 A2 (ABB AG [DE]; SZASZ PAUL [DE] ET AL.) 16 June 2011 (2011-06-16) * the whole document * ----- | 1-8 | |

TECHNICAL FIELDS
SEARCHED      (IPC)

G01L

The present search report has been drawn up for all claims

| Place of search | Date of completion of the search | Examiner |
|---|---|---|
| The Hague | 11 September 2023 | Moscelli, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 4762

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2023

| Patent document cited in search report | | Publication date | Patent family member(s) | | Publication date |
|---|---|---|---|---|---|
| EP 1688725 | A1 | 09-08-2006 | CN | 1860355 A | 08-11-2006 |
| | | | EP | 1688725 A1 | 09-08-2006 |
| | | | JP | 2005106679 A | 21-04-2005 |
| | | | US | 2007000335 A1 | 04-01-2007 |
| | | | WO | 2005033646 A1 | 14-04-2005 |
| WO 2011069515 | A2 | 16-06-2011 | CN | 102812341 A | 05-12-2012 |
| | | | EP | 2510325 A2 | 17-10-2012 |
| | | | US | 2012266694 A1 | 25-10-2012 |
| | | | WO | 2011069515 A2 | 16-06-2011 |

EPO FORM P0459

For more details about this annex : see Official Journal of the European Patent Office, No. 12/82